# EUROPEAN PATENT APPLICATION

(11) **EP 2 833 593 A1**
(43) Date of publication of application: **04.02.2015**
(21) Application number: 12872821.9
(22) Date of filing: 29.03.2012
(51) Int. Cl.: H04L 29/04, G06F 11/22, H04L 29/00, H04L 29/08, H04L 29/14

(54) **INFORMATION PROCESSING DEVICE AND INFORMATION PROCESSING DEVICE CONTROL METHOD**

(71) Applicant: FUJITSU LIMITED, Kawasaki-shi Kanagawa 211-8588 (JP)
(72) Inventor: MAEDA, Koichi, Kawasaki-shi Kanagawa 211-8588 (JP); HAYASAKA, Kazumi, Kawasaki-shi Kanagawa 211-8588 (JP)
(74) Representative: Hoffmann Eitle
(86) International application number: PCT/JP2012/058464
(87) International publication number: WO 2013/145240

(57) **Abstract**

A reception circuit receives data using a plurality of lanes. When a failure occurs in one of the lanes, an all lanes control unit (505) degenerates a predetermined number of lanes including the lane in which the failure has occurred. Then, a continuously-operated lane control unit (504) causes the reception circuit to receive the data using remaining lanes except for the predetermined number of degenerated lanes among the lanes. A degenerated lane control unit (503) performs retraining to establish links in the predetermined number of lanes. When the links are established by the retraining with the degenerated lane control unit (503), an all lanes control unit (505) causes the reception circuit to receive the data using the predetermined number of lanes and the remaining lanes.

## Description

### [Technical Field]

The present invention relates to an information processing apparatus and a method for controlling the information processing apparatus.

### [Background Art]

There is a technique in which serial communication is performed using a plurality of lanes in a data transmission between the ports, for example, of a Central Processing Unit (CPU) and a cross bar switch. In that case, the port on the transmitting side divides the transmission data to transmit the data through each of the lanes. The port on the receiving side restores the data received through each of the lanes as a piece of data. As described above, in the operation in which a plurality of lanes is used, there is a risk that the data may not be restored on the receiving side when a failure occurs in one of the lanes. In such a case, a process for establishing the communication between the transmitting side and the receiving side is performed again to relink the transmitting side to the receiving side. The process is referred to as "retraining".

Hereinafter, the procedures of the process for the retraining will be described. In the retraining, the device that is on one of the transmitting side or the receiving side and that sends the request for establishing the link stops the normal packet transmission and starts transmitting a pattern for establishing the link that is referred to as a "Training Sequence Order Set (TSOS)". When receiving the TSOS, the device on the other side stops the normal packet transmission and returns the TSOS.

Next, the device that has received the TSOS performs a symbol lock that draws the boundaries among the bits in each of the lanes again. Specifically, a pattern for performing the symbol lock is included in the TSOS. After receiving the TSOS, each of the devices detects a bit sequence that makes sense and is included in the TSOS as a pattern to draw the boundaries among the bits in the data in each of the lanes again.

Next, each of the devices performs de-skew that adjusts the timing of the data reading in each of the lanes. Specifically, there is misalignment in the data referred to as skew among the used lanes. A unit of data is referred to as a symbol. The number of symbols represents how much the lane-to-lane skew is. The lane-to-lane de-skew is a process for compensating the lane-to-lane skew. The lane-to-lane de-skew is performed using a de-skew symbol included in the training pattern. The de-skew symbols are simultaneously transmitted through the lanes and stored in a de-skew buffer on the receiving side. Starting the data reading from the de-skew buffer in time with the lane in which the de-skew symbol has reached last can compensate all of the lane-to-lane skews.

Next, each of the devices performs the clock compensation that adjusts the clock frequency drift between the transmitting side and the receiving side. Specifically, there is sometimes the difference of the clock frequencies between the port on the transmitting side and the port on the receiving side. An elastic buffer exists as a mechanism that absorbs the difference of the clock frequencies. The elastic buffer is configured to absorb the clock frequency in the data transmission between the devices. When the reading clock is slower than the writing clock, a Skip Order Set (SKPOS) that is in the reception data temporarily stored in the elastic buffer is detected and an SKPSymbol is embedded into the reception data. Herein, the combination of a COMSymbol referred to as a clock frequency difference compensating pattern and the following SKPSymbol is referred to as an SKPOS. When the reading clock is slower than the writing clock, the SKPOS that is in the reception data temporarily stored in the elastic buffer is detected and the SKPSymbol is skipped when the reception data is read.

Next, each of the devices performs a link configuration negotiation. Specifically, the TSOS is transmitted through each of the lanes. Accordingly, each of the devices determines that there is a failure in the lane through which the TSOS has not normally be received. Then, both of the devices on the transmitting side and the receiving side transmit the information about the lane through which the TSOS has been received to each other using the TSOS to determine the lane to be used. Each of the devices establishes the links through all of the lanes when there is not a failure in any of the lane.

When the lane to be used in the configuration negotiation has been determined, the devices transmit the TSOS to each other to obtain an agreement with each other to establish the link.

During the process for the retraining described above, normal packet transmission between the devices is not performed because the TSOS is transmitted between the ports. Such a state is referred to as packet delay.

Note that there is a conventional technique configured to save the electric power by making the lanes into non-operating status except for a designated lane in a communication using a plurality of lanes as described above.

### [Citation List]

### [Patent Citation]

Patent Literature 1: Japanese Laid-open Patent Publication No 2010-147702

### [Summary of Invention]

### [Technical Problem]

However, the reception of the TSOS is monitored for about tens of milliseconds in the procedures described above for the retraining in order to determine whether the failure is an intermittent failure or a permanent failure. When the TSOS is not received even after a given period of time has elapsed since the start of the monitor, it is determined that the failure is a permanent failure and the lane is degenerated. There is a risk in that the total of the retraining term is increased and the packet delay is extended because it takes time to determine whether the failure is an intermittent failure or a permanent failure.

Furthermore, the timeout period of the CPU or the like is sometimes shorter than the retraining period. In that case, there is also a risk in that the packet delay causes a timeout error in the CPU and the system including the point at which the timeout error has occurred may not be used.

It is difficult to avoid a long-term packet delay or a timeout error in the CPU even when the conventional technique configured to make the lanes other than the designated lane into nonoperation status is used.

According to an aspect, an objective of the present invention is to provide an information processing apparatus and method for controlling the information processing apparatus that reduce the packet delay in the event of occurrence of a failure in a lane.

### [Solution to Problem]

According to an aspect of an embodiment, an information processing apparatus includes a reception unit configured to receive data using a plurality of lanes, a degeneration control unit configured, when a failure occurs in one of the lanes, to degenerate a predetermined number of lanes including a lane in which the failure has occurred and to cause the reception unit to receive the data using remaining lanes except for the predetermined number of the degenerated lanes among the lanes, a retraining unit configured to perform retraining to establish links in the predetermined number of the degenerated lanes, and a return control unit configured, when the links are established in the predetermined number of lanes degenerated by the retraining with the retraining unit, to cause the reception unit to receive the data using the predetermined number of the degenerated lanes and the remaining lanes.

### [Brief Description of Drawings]

FIG. 1 is a diagram of an exemplary configuration of an information processing apparatus according to an embodiment.
FIG. 2 is a block diagram of the ports included in the information processing apparatus according to the embodiment.
FIG. 3 is a diagram describing de-skew.
FIG. 4 is a diagram describing clock compensation.
FIG. 5 is a block diagram of the detail of a degeneration control unit.
FIG. 6 is a conceptual diagram when three lanes are degenerated.
FIG. 7A is a diagram describing the adjustment of misalignment in the de-skew when the data reading in the degenerated lanes are fast.
FIG. 7B is a diagram describing the adjustment of misalignment in the de-skew when the data reading in the degenerated lanes are slow.
FIG. 8 is a flowchart of the process in the event of a failure and the failure recovery in the information processing apparatus according to the embodiment.
FIG. 9 is a comparison diagram of the embodiment and an exemplary related art when an operation is performed while lanes are degenerated and the degenerated lanes are returned.
FIG. 10 is a comparison diagram of the embodiment and an exemplary related art when an operation is performed while lanes are degenerated and the degenerated lanes are not returned.

### [Embodiments for Carrying Out the Invention]

Hereinafter, an embodiment of the information processing apparatus and method for controlling the information processing apparatus disclosed in the present invention will be described in detail with reference to the appended drawings. Note that the information processing apparatus and method for controlling the information processing apparatus disclosed in the present invention is not limited to the embodiment described below.

### [Embodiment]

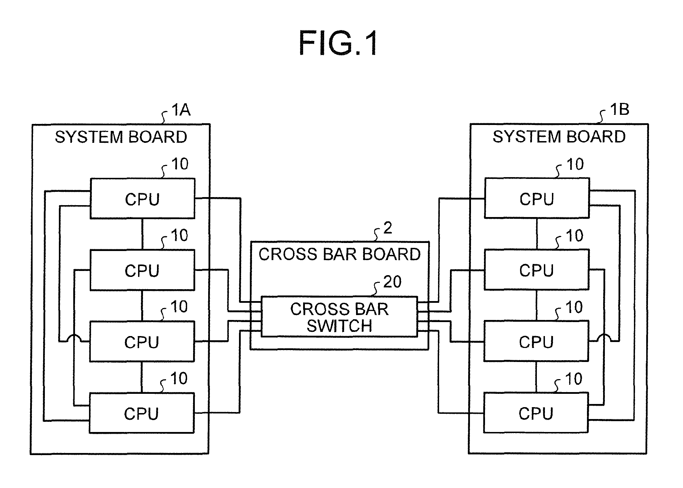

FIG. 1 is a diagram of an exemplary configuration of an information processing apparatus according to the embodiment. As illustrated in FIG. 1, an information processing apparatus according to the embodiment includes system boards 1A and 1B, and a cross bar board 2. A plurality of Central Processing Units (CPU) 10 is installed on each of the system boards 1A and 1B. A cross bar switch 20 is installed on the cross bar board 2. The port of each of the CPUs 10 is connected to the port of the cross bar switch 20 through a system bus. In that case, the configuration illustrated in FIG. 1 is an exemplary information processing apparatus according to the present embodiment and can be applied not only to the connection between the CPUs 10 and the cross bar switch 20 but also to the connection between cross bar switches 20.

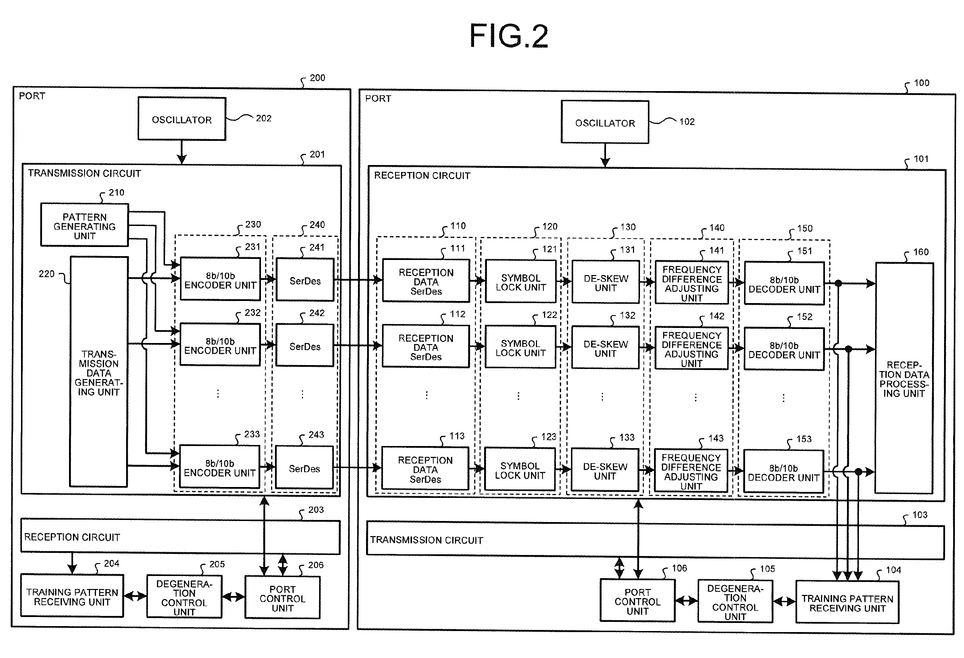

FIG. 2 is a block diagram of the ports included in the information processing apparatus according to the embodiment. FIG. 2 illustrates each unit that performs communication between a port 200 of the cross bar switch 20 and a port 100 of the CPU 10 illustrated in FIG. 1. The port 200 of the cross bar switch 20 includes a transmission circuit 201, an oscillator 202, a reception circuit 203, a training pattern receiving unit 204, a degeneration control unit 205, and a port control unit 206. The port 100 of the CPU 10 includes a reception circuit 101, an oscillator 102, a transmission circuit 103, a training pattern receiving unit 104, a degeneration control unit 105 and a port control unit 106. Hereinafter, the transmission circuit 201 will mainly be described because the transmission circuit 201 operates in the same manner as the transmission circuit 103. Hereinafter, the reception circuit 101 will mainly be described because the reception circuit 101 operates in the same manner as the reception circuit 203. Furthermore, the training pattern receiving unit 104, the degeneration control unit 105, and the port control unit 106 operate in the same manners as the training pattern receiving unit 204, the degeneration control unit 205, and the port control unit 206. Thus, the training pattern receiving unit 104, the degeneration control unit 105, and the port control unit 106 will mainly be described.

The transmission circuit 201 is connected to the reception circuit 101 through eight lanes of serial buses. However, the drawing illustrates only three lanes for the convenience of description.

The transmission circuit 201 includes a pattern generating unit 210, a transmission data generating unit 220, an 8b/10b encoder units 231 to 233, and Serializers/Deserializers (SerDeses) 241 to 243. Herein, FIG. 2 illustrates three 8b/10b encoder units 231 to 233 and three SerDeses 241 to 243 for the convenience of description although eight of 8b/10b encoder units and eight of SerDeses exist as many as the number of lanes.

The transmission data generating unit 220 divides the data to be transmitted to the CPU 10 in accordance with the number of lanes to be used for the transmission. In that case, the data is transmitted using eight lanes. Thus, the transmission data generating unit 220 divides the data into eight pieces of data. The pieces of the divided data are output to eight of the 8b/10b encoder units 231 to 233.

The pattern generating unit 210 generates an TSOS when the link between the port 200 and the port 100 is established. In that case, the time when the link is established is, for example, the time when a communication between the port 200 and the port 100 is started or the time when a failure has occurred in one of the lanes and the lane in which the failure has occurred is returned. Hereinafter, the operation in which the link between the port 200 and the port 100 is established during the failure recovery is sometimes referred to as retraining. The pattern generating unit 210 outputs the TSOS to the 8b/10b encoder units 231 to 233. The TSOS includes a training pattern for establishing the link. The training pattern included in the TSOS includes a pattern for symbol lock and a de-skew symbol for de-skew. The symbol lock and the de-skew will be described below. The pattern generating unit 210 generates also a clock frequency difference compensating pattern. Then, the pattern generating unit 210 outputs the generated clock frequency difference compensating pattern to the 8b/10b encoder units 231 to 233.

The 8b/10b encoder units 231 to 233 exist as many as the number of the lanes. The 8b/10b encoder units 231 to 233 have the same function. Thus, when the 8b/10b encoder units 231 to 233 are not distinguished from each other in the description below, the 8b/10b encoder units 231 to 233 are merely referred to as an "8b/10b encoder unit 230". The 8b/10b encoder unit 230 receives the input of the TSOS from the pattern generating unit 210, for example, in the retraining. The 8b/10b encoder unit 230 also receives the input of the clock frequency difference compensating pattern from the pattern generating unit 210, for example, in the retraining. When the data is transmitted and received after the link between the port 200 and the port 100 has been established, the 8b/10b encoder unit 230 also receives the input of the data divided into the number of the lanes from the transmission data generating unit 220. Then, the 8b/10b encoder unit 230 converts the received data from the 8-bit codes to the 10-bit codes. Then, the 8b/10b encoder unit 230 outputs the data converted into the 10-bit codes to the SerDeses 241 to 243.

The SerDeses 241 to 243 exist as many as the number of the lanes. The SerDeses 241 to 243 have the same function. Thus, when the SerDeses 241 to 243 are not distinguished from each other in the description below, the SerDeses 241 to 243 are merely referred to as a "SerDes 240". The SerDes 240 converts the data received from the 8b/10b encoder unit 230 from the parallel data to the serial data. Then, the SerDes 240 outputs the data converted into the serial data to the serial bus connecting the port 200 to the port 100.

The reception circuit 101 includes reception data SerDeses 111 to 113, symbol lock units 121 to 123, de-skew units 131 to 133, frequency difference adjusting units 141 to 143, 8b/10b decoder units 151 to 153, and a reception data processing unit 160. FIG. 2 illustrates three reception data SerDeses 111 to 113, three symbol lock units 121 to 123, three de-skew units 131 to 133, three frequency difference adjusting units 141 to 143, and three 8b/10b decoder units 151 to 153 for the convenience of description although eight of units exist as many as the number of lanes, individually.

The reception data SerDeses 111 to 113 exist as many as the number of the lanes. The reception data SerDeses 111 to 113 have the same function. Thus, when the reception data SerDeses 111 to 113 are not distinguished from each other in the description below, the reception data SerDeses 111 to 113 are merely referred to as a "reception data SerDes 110". The reception data SerDes 110 converts the received data from the serial data to the parallel data. Then, the reception data SerDes 110 outputs the data converted into the parallel data to the symbol lock units 121 to 123.

The symbol lock units 121 to 123 exist as many as the number of the lanes. The symbol lock units 121 to 123 have the same function. Thus, when the symbol lock units 121 to 123 are not distinguished from each other in the description below, the symbol lock units 121 to 123 are merely referred to as a "symbol lock unit 120".

The symbol lock unit 120 receives the input of the TSOS from the reception data SerDes 110 when the link is established. At that time, the TSOS is input to each of the lanes. Then, the symbol lock unit 120 detects a pattern for symbol lock from the received TSOS in each of the lanes. Then, the symbol lock unit 120 detects the boundaries in the data in each of the lanes by drawing the boundaries of the bits in the data in each of the lanes again using the position of the detected pattern for symbol lock. The symbol lock is a process for detecting a boundary in the data.

In a normal data reception, the symbol lock unit 120 performs a symbol lock at a position in the data in each of the lanes that has been determined when the link has been established. Then, the symbol lock unit 120 outputs the data in each of the lanes in which the symbol lock has been performed to the de-skew units 131 to 133.

The de-skew units 131 to 133 exist as many as the number of the lanes. The de-skew units 131 to 133 have the same function. Thus, when the de-skew units 131 to 133 are not distinguished from each other in the description below, the de-skew units 131 to 133 are merely referred to as a "de-skew unit 130".

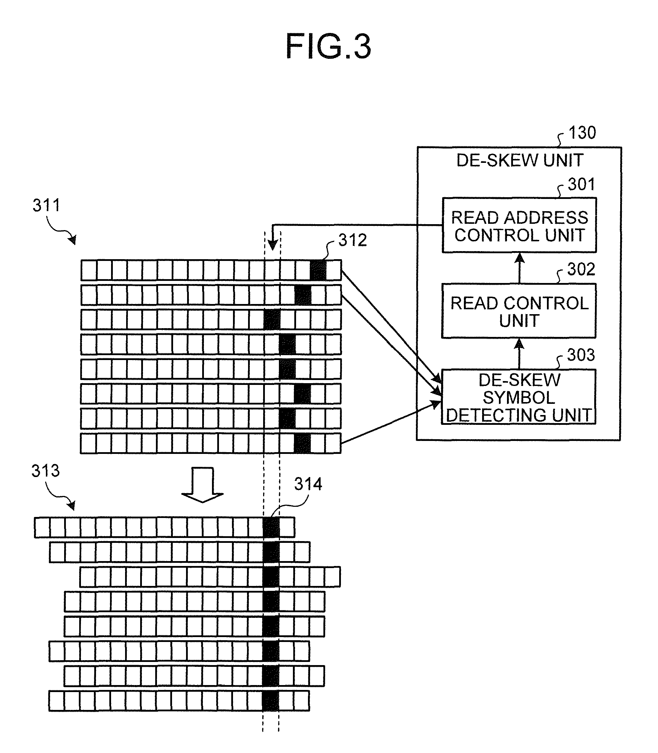

The operation of the de-skew unit 130 when the link is established, for example, in the retraining will be described with reference to FIG. 3. FIG. 3 is a diagram describing the de-skew. As illustrated in FIG. 3, the de-skew unit 130 includes a read address control unit 301, a read control unit 302, and a de-skew symbol detecting unit 303.

Next, the de-skew unit 130 receives the TSOS in each of the lanes in which the symbol lock has been performed from the symbol lock unit 120. Then, the de-skew unit 130 stores the received TSOS in a de-skew buffer. Data 311 in FIG. 3 shows the status of the TSOS input to each of eight lanes and stored in the de-skew buffer. The data 311 shows the data stored in the de-skew buffer in order from the left side. For example, a block in the data 311 is the data of 10 bits. Then, the de-skew symbol detecting unit 303 detects the de-skew symbol from the data in each of the lanes stored in the de-skew buffer. The data of the filled block in the data 311 is a de-skew symbol 312. There are time lags among the timings of storage of the de-skew symbol 312 in the lanes in the de-skew buffer before the de-skew unit 130 performs the de-skew. The data in the third lane from the top on the drawing paper lags behind most in the data 311. In other words, reading the data without any change causes the time lags among the data in the lanes. The de-skew symbol detecting unit 303 notifies the fact that the de-skew symbol detecting unit 303 has detected the de-skew symbol to the read control unit 302.

The read control unit 302 receives the notification indicating the fact that the de-skew symbol detecting unit 303 has detected the de-skew symbol from the de-skew symbol detecting unit 303. Then, the read control unit 302 gives the read address control unit 301 the instructions to stop the increment of the read address in the lane in which the read control unit 302 has received the notification indicating the fact that the de-skew symbol detecting unit 303 has detected the de-skew symbol. Then, the read control unit 302 sequentially gives the read address control unit 301 the instructions to stop the increment of the read address in the other lanes until receiving the notification indicating the detection of the de-skew symbol in the lane of which data lags behind most among the eight lanes. When receiving the notification indicating the detection of the de-skew symbol in the lane of which data lags behind most among the eight lanes, the read control unit 302 notifies the read address control unit 301 of the increment of the read addresses in all of the lanes.

The read address control unit 301 reads the data in each of the lanes stored in the de-skew buffer while incrementing the read address. Then, the read address control unit 301 receives the instructions to stop the increment of the read address from the read control unit 302 and stops the increment of the read address of the data in the lane in which the instructions have been given. After that, when receiving the instructions on the increment of the read addresses in all of the lanes from the read control unit 302, the read address control unit 301 reads the data in all of the eight lanes stored in the de-skew buffer while incrementing the read addresses. This enables the read address control unit 301 to read the data in each of the lanes so as to adjust the timings of the de-skew symbols 314 in the lanes to the timing of the de-skew symbol 314 in the data of which de-skew symbol 314 lags behind most, illustrated as the data 313. A pattern for adjusting the timings of data reading is hereinafter referred to as a "de-skew pattern". The pattern is for, for example, the adjustment of the suspension period for the increment of the read address. The suspension period is adjusted such that the data in the lanes is read in synchronized timing as described above. A position of the de-skew symbol in each of the lanes at the timing of data reading adjusted such that the de-skew symbols are read in all of the lanes in synchronized timing is hereinafter referred to as a "de-skew position".

The de-skew unit 130 performs the de-skew described above in all of the eight lanes, for example, at the time of startup. Furthermore, when receiving the instructions for the retraining in the degenerated lane to be degenerated when a failure occurs from the port control unit 106, the de-skew unit 130 performs the de-skew described above in the three lanes that are the degenerated lanes. Furthermore, as described below, the de-skew unit 130 sometimes receives the instructions for the adjustment of the skew between the degenerated lanes and the continuously operated lanes in which the operation are continued from the degeneration control unit 105 after the completion of the retraining in the degenerated lanes. In that case, the de-skew unit 130 performs the de-skew in compliance with the instructions so as to adjust the de-skew positions in the degenerated lanes to the de-skew positions in the continuously operated lanes.

Next, the operation of the de-skew unit 130 in normally data reception will be described. The de-skew unit 130 receives the data from the reception data SerDes 110. Then, the de-skew unit 130 stores the received data in the de-skew buffer using the boundary positions in each of the lanes determined in the symbol lock with the symbol lock unit 120. Then, the de-skew unit 130 reads the data in each of the lanes stored in the de-skew buffer with the de-skew pattern determined when the link has been established. Then, the de-skew unit 130 outputs the read data to the frequency difference adjusting units 141 to 143.

The frequency difference adjusting units 141 to 143 exist as many as the number of the lanes. The frequency difference adjusting units 141 to 143 have the same function. Thus, when the frequency difference adjusting units 141 to 143 are not distinguished from each other in the description below, the frequency difference adjusting units 141 to 143 are merely referred to as a "frequency difference adjusting unit 140". The port 200 receives the supply of a reference clock from the oscillator 202. Furthermore, the port 100 receives the supply of a reference clock from the oscillator 102. In other words, the port 200 and the port 100 receive the reference clocks from the different oscillators. In that case, the frequencies of the reference clocks are sometimes different from each other due to the individual variability in the oscillators. In light of the foregoing, the frequency difference adjusting unit 140 performs a process for absorbing the difference between the frequencies of the port 200 and the port 100. The process is sometimes referred to as "clock compensation".

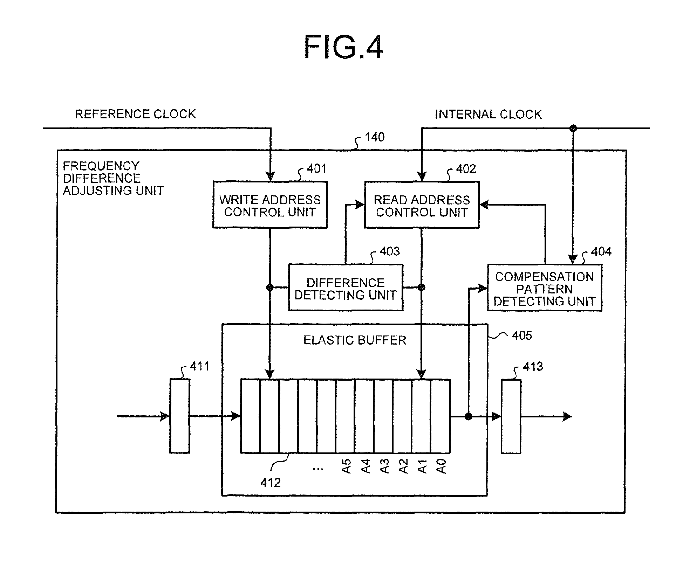

The operation of the frequency difference adjusting unit 140 when the link is established, for example, in the retraining will be described with reference to FIG. 4. FIG. 4 is a diagram describing the clock compensation. As illustrated in FIG. 4, the frequency difference adjusting unit 140 includes a write address control unit 401, a read address control unit 402, a difference detecting unit 403, a compensation pattern detecting unit 404, and an elastic buffer 405.

The frequency difference adjusting unit 140 receives the input of the clock frequency difference compensating pattern in which the de-skew has been performed from the de-skew unit 130.

The write address control unit 401 writes the received clock frequency difference compensating pattern into the elastic buffer 405 using the clock of the clock frequency difference compensating pattern. For example, the data 411 received with the frequency difference adjusting unit 140 is written into the elastic buffer 405 with the write address control unit 401, and stored in the same manner as data 412. FIG. 4 illustrates that a reference clock is supplied to the write address control unit 401. This means that the reference clock is obtained from the received data. For example, the write address control unit 401 writes the data of 10 bits per clock in the present embodiment. Herein, the data of 10 bits is a symbol in the present embodiment.

The compensation pattern detecting unit 404 obtains the data read with the read address control unit 402. The data includes a COMSymbol that is the clock frequency difference compensating pattern. Furthermore, a Skip (SKP)Symbol follows the COMSymbol in the data. The combination of the COMSymbol and the SKPSymbol is sometimes referred to as a Skip Order Set (SKPOS). At that time, the compensation pattern detecting unit 404 is operated with the internal clock supplied from the oscillator 102. Then, the compensation pattern detecting unit 404 detects the SKPOS from the obtained data. The compensation pattern detecting unit 404 notifies the detection of the SKPOS to the read address control unit 402.

The difference detecting unit 403 calculates the difference between the timing when the write address control unit 401 writes the data to the elastic buffer 405 and the timing when the read address control unit 402 read the data from the elastic buffer 405. Then, the difference detecting unit 403 notifies the calculated difference to the read address control unit 402.

The read address control unit 402 receives the notification of the detection of the clock frequency difference compensating pattern from the compensation pattern detecting unit 404. Then, the read address control unit 402 reads the data in the elastic buffer so as to absorb the difference received from the difference detecting unit 403.

First, the case in which the read address control unit 402 reads the data faster than the write address control unit 401 writes the data. In that case, the read address control unit 402 receives the notification of the detection of the SKPOS from the compensation pattern detecting unit 404 and embeds the SKPSymbol into the data in the elastic buffer 405. Then, the read address control unit 402 reads the data in the elastic buffer 405 including the embedded SKPSymbol. This delays the reading with the read address control unit 402 and thus can synchronize the data reading with the read address control unit 402 and the data writing with the write address control unit 401.

Next, the case in which the read address control unit 402 reads the data more slowly than the write address control unit 401 writes the data. In that case, after receiving the notification of the detection of the SKPOS from the compensation pattern detecting unit 404, the read address control unit 402 reads the data in the elastic buffer 405 and skips the SKPSymbol while reading the data in the elastic buffer 405. This causes the read address control unit 402 to read the data faster. Thus, the data reading with the read address control unit 402 and the data writing with the write address control unit 401 can be synchronized.

Next, the operation of the frequency difference adjusting unit 140 in normal data reception will be described. The frequency difference adjusting unit 140 receives the data from the de-skew unit 130 and stores the data in the elastic buffer 405. Then, the frequency difference adjusting unit 140 reads the data stored in the elastic buffer 405 while skipping or embedding the SKPSymbol determined when the link has been established in each piece of data. Then, the frequency difference adjusting unit 140 outputs data to the 8b/10b decoder units 151 to 153.

The 8b/10b decoder units 151 to 153 exist as many as the number of the lanes. The 8b/10b decoder units 151 to 153 have the same function. Thus, when the 8b/10b decoder units 151 to 153 are not distinguished from each other in the description below, the 8b/10b decoder units 151 to 153 are merely referred to as an "8b/10b decoder unit 150". The 8b/10b decoder unit 150 receives the input of the data from the frequency difference adjusting unit 140. Then, the 8b/10b decoder unit 150 converts the received data from the 10-bit codes to the 8-bit codes. When the data converted into the 8-bit codes is normal data, the 8b/10b decoder unit 150 transmits the data to the reception data processing unit 160. When the data is the TSOS, the 8b/10b decoder unit 150 outputs the TSOS to the training pattern receiving unit 104.

The reception data processing unit 160 receives the data from the 8b/10b decoder unit 150. Then, the reception data processing unit 160 merges the received data in the lanes to generate a piece of data. After that, the reception data processing unit 160, for example, transfers the data to the other processing unit.

The training pattern receiving unit 104 receives the TSOS transmitted through each of the lanes from the 8b/10b decoder unit 150. Then, the training pattern receiving unit 104 outputs the received TSOS to the degeneration control unit 105.

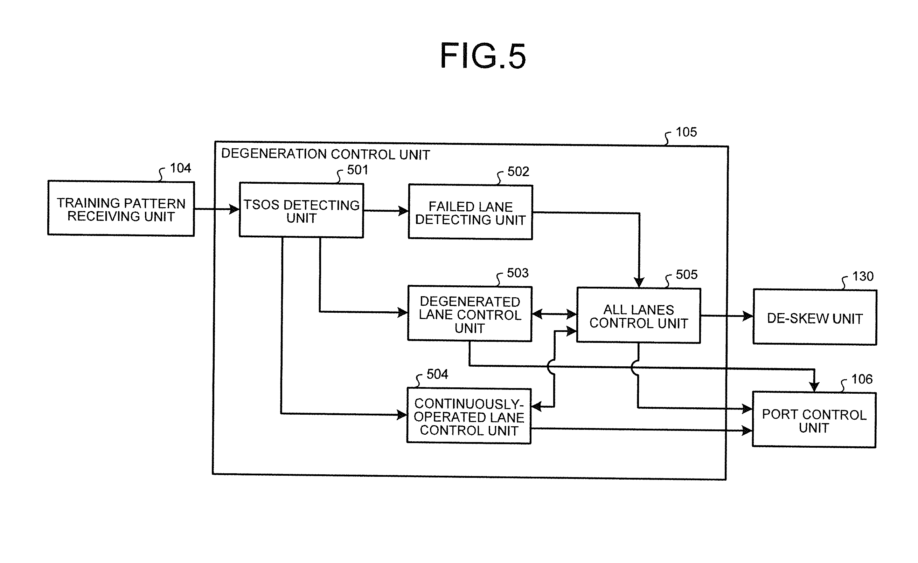

As illustrated in FIG. 5, the degeneration control unit 105 includes a TSOS detecting unit 501, a failed lane detecting unit 502, a degenerated lane control unit 503, a continuously-operated lane control unit 504, and an all lanes control unit 505. FIG. 5 is a block diagram illustrating the detail of the degeneration control unit.

The TSOS detecting unit 501 receives the input of the TSOS in each of the lane from the training pattern receiving unit 104. The TSOS detecting unit 501 notifies the information on the lane through which the TSOS has normally been received to the failed lane detecting unit 502 per lane.

The failed lane detecting unit 502 receives the information on the lane through which the TSOS has normally been received from the TSOS detecting unit 501. Then, the failed lane detecting unit 502 detects the lane through which the TSOS has not normally been detected as a failed lane from the eight lanes. After that, the failed lane detecting unit 502 notifies the information on the detected failed lane to the all lanes control unit 505.

The all lanes control unit 505 receives the information on the failed lane from the failed lane detecting unit 502. Then, the all lanes control unit 505 determines three lanes including the failed lane and to be degenerated. The lanes to be degenerated can previously be stored, for example, in the all lanes control unit 505 for each of the lanes as a combination of the lanes to be degenerated in the event of a failure in a lane. The lanes can be numbered as one to eight, and the failed lane and the lanes of which numbers next to the number of the failed lane can previously be determined as lanes to be degenerated in case of a failure in a lane in a rule for selecting the lanes. One of the adjacent lanes to the lane on an end can be deemed as the lane on the other end. In that case, the all lanes control unit 505 determines the lanes to be degenerated in compliance with the predetermined rule for selecting the lanes.

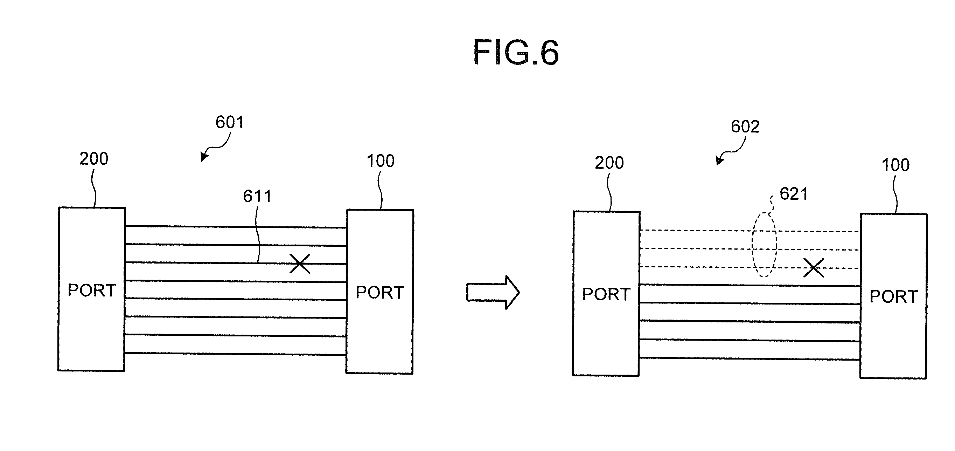

FIG. 6 is a conceptual diagram of the case in which three lanes are degenerated. In a status 601, the operation is normally performed in the eight lanes before degeneration. When a failure occurs in a lane 611 in the status 601, the all lanes control unit 505 selects three lanes including the lane 611 and to be degenerated. In FIG. 6, three lanes 621 are degenerated and the operation is continued in the other five lanes as a status 602.

Then, the all lanes control unit 505 notifies the information on the determined lanes to be degenerated to the port control unit 106. Furthermore, the all lanes control unit 505 notifies, to the continuously-operated lane control unit 504, the fact that the operation is performed under the degeneration together with the information on the stored de-skew pattern before the occurrence of the failure and on the lanes to be used after the degeneration. The all lanes control unit 505 further notifies the information on the lanes to be degenerated to the degenerated lane control unit 503.

When the retraining has been completed after the failure recovery, the all lanes control unit 505 receives the notification of the completion of the retraining from the degenerated lane control unit 503. Then, the all lanes control unit 505 notifies the completion of the retraining to the continuously-operated lane control unit 504. After that, the all lanes control unit 505 gives the port control unit 106 the instructions to transmit and receive an Oder Set (OS) for return. Then, when it is confirmed that the eight lanes are returned between the degeneration control unit 205 of the port 200 and the degeneration control unit 105 of the port 100 by transmitting and receiving the OS for return, the all lanes control unit 505 obtains the information on the de-skew pattern from the degenerated lane control unit 503. The all lanes control unit 505 also obtains the information on the de-skew pattern from the continuously-operated lane control unit 504. The all lanes control unit 505 obtains the misalignment among the de-skew positions of the five currently used lanes and the de-skew positions of the three degenerated lanes. After that, the all lanes control unit 505 gives the de-skew unit 130 the instructions to adjust the increment of the read addresses such that the de-skew positions of the five currently used lanes correspond to the de-skew positions of the three degenerated lanes. The adjusting method is performed in a manner similar to the de-skew performed among the lanes with the de-skew unit 130. In the method, the timings of data reading in the lanes are adjusted to the timing of data reading in the lane in which the data is read most slowly by stopping the increment of the read addresses in the lanes in which the data is read faster.

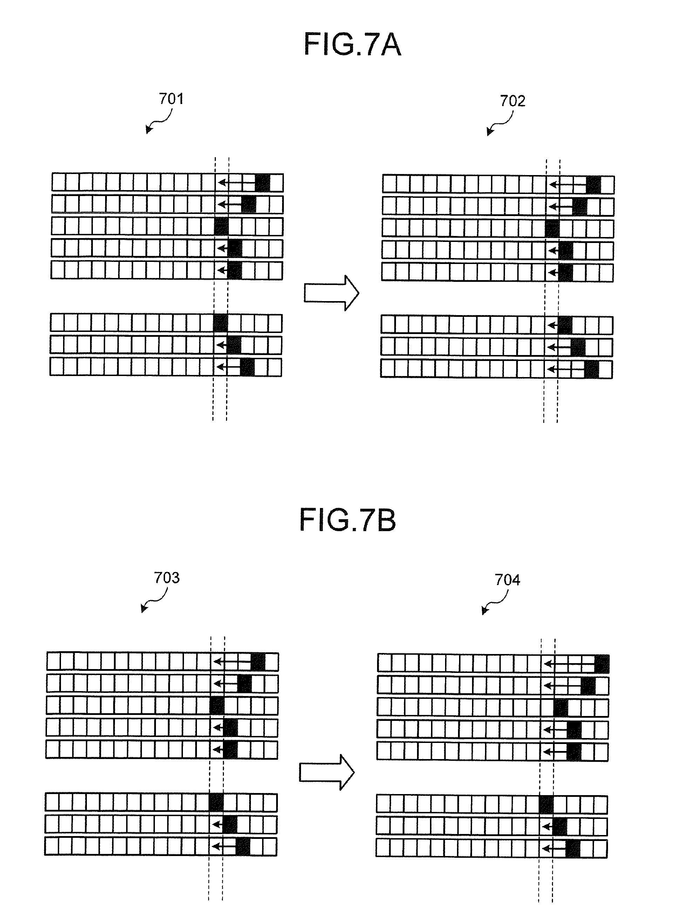

FIG. 7A is a diagram describing the adjustment of misalignment of the de-skew positions when the data reading in the degenerated lanes is faster than the data reading in the used lanes. FIG. 7B is a diagram describing the adjustment of misalignment of the de-skew positions when the data reading in the degenerated lanes is slower than the data reading in the used lanes.

In the case illustrated in FIG. 7A, the data in each of the lanes adjusts the de-skew positions to each other by delaying, illustrated as a status 701 before the failure has occurred. However, when the number of the lanes is returned to eight after the three lower lanes in FIG. 7A have been degenerated due to a failure, the three degenerated lanes progress more in comparison with the status before the failure, illustrated as a status 702. In that case, the all lanes control unit 505 causes the de-skew unit 130 to stop the increment of the read addresses in the three degenerated lanes so as to adjust the de-skew positions of the three lanes to the de-skew positions of the five currently used lanes. After that, the all lanes control unit 505 gives the de-skew unit 130 the instructions to read the data while incrementing the read addresses in all of the lanes.

In the case illustrated in FIG. 7B, the data in each of the lanes adjusts the de-skew positions to each other by delaying, illustrated as a status 703 before the failure has occurred. However, when the number of the lanes is returned to eight after the three lower lanes in FIG. 7B have been degenerated due to a failure, the three degenerated lanes lag behind in comparison with the status before the failure, illustrated as a status 704. In that case, the all lanes control unit 505 causes the de-skew unit 130 to stop the increment of the read addresses in the five currently used lanes so as to adjust the de-skew positions of the five currently used lanes to the de-skew positions of the three degenerated lanes. After that, the all lanes control unit 505 gives the de-skew unit 130 the instructions to read the data while incrementing the read addresses in all of the lanes.

The degenerated lane control unit 503 receives the information on the lanes to be degenerated in the event of a failure from the all lanes control unit 505. After that, when the lane is recovered from the failure, the degenerated lane control unit 503 receives the notification of the detection of the TSOS from the TSOS detecting unit 501. Then, the degenerated lane control unit 503 gives the port control unit 106 the instructions for the retraining in the three degenerated lanes.

When the retraining in the three degenerated lanes is completed and the link is established, the degenerated lane control unit 503 notifies the completion of the retraining to the all lanes control unit 505. At that time, the degenerated lane control unit 503 notifies the de-skew patterns of the three degenerated lanes transmitted from the de-skew units 130 to the all lanes control unit 505.

The continuously-operated lane control unit 504 receives the information on the five continuously operated lanes in which the operation is to be continued in the event of a failure from the all lanes control unit 505. The continuously-operated lane control unit 504 further receives the information on the de-skew patterns in the continuously operated lanes during normal operation from the all lanes control unit 505. Then, the continuously-operated lane control unit 504 gives the port control unit 106 the instructions to transmit and receive the TSOS with the port 200 using the continuously operated lanes. When the transmission and reception of the TSOS through the continuously operated lanes is completed, the continuously-operated lane control unit 504 controls the port control unit 106 to transmit and receive the data using the de-skew patterns that have been used in the continuously operated lanes during normal operation.

After that, when the lane is recovered from the failure and the retraining in the three degenerated lanes is completed, the continuously-operated lane control unit 504 receives the notification of the completion of the retraining from the all lanes control unit 505. Then, the continuously-operated lane control unit 504 notifies the information on the de-skew pattern used for transmitting and receiving the data to the all lanes control unit 505.

The port control unit 106 controls the reception circuit 101 and the transmission circuit 103 to obtain the de-skew pattern from the all lanes control unit 505 to transmit and receive the data using the de-skew pattern during normal operation.

The port control unit 106 receives the information on the lanes to be degenerated from the all lanes control unit 505 in the event of a failure. The port control unit 106 receives the instructions to transmit and receive the TSOS through the continuously operated lanes in which the operation is to be continued from the continuously-operated lane control unit 504. Then, the port control unit 106 controls the reception circuit 101 and the transmission circuit 103 to transmit and receive the TSOS through the continuously operated lanes. When the transmission and reception of the TSOS through the continuously operated lanes is completed, the port control unit 106 gives the reception circuit 101 and the transmission circuit 103 the instructions to transmit and receive the data through the continuously operated lanes using the de-skew patterns in the continuously operated lanes received from the continuously-operated lane control unit 504. After that, when the lane is recovered from the failure, the port control unit 106 receives the execution of the retraining from the degenerated lane control unit 503. After receiving the execution, the port control unit 106 gives the reception circuit 101 and the transmission circuit 103 the instructions to execute the retraining. The port control unit 106 further receives the instructions to return the number of lanes to eight from the all lanes control unit 505 after the completion of the retraining. At that time, the port control unit 106 receives the de-skew patterns from the all lanes control unit 505. Then, the port control unit 106 gives the reception circuit 101 and the transmission circuit 103 the instructions to transmit and receive the data through all of the eight lanes using the received de-skew patterns.

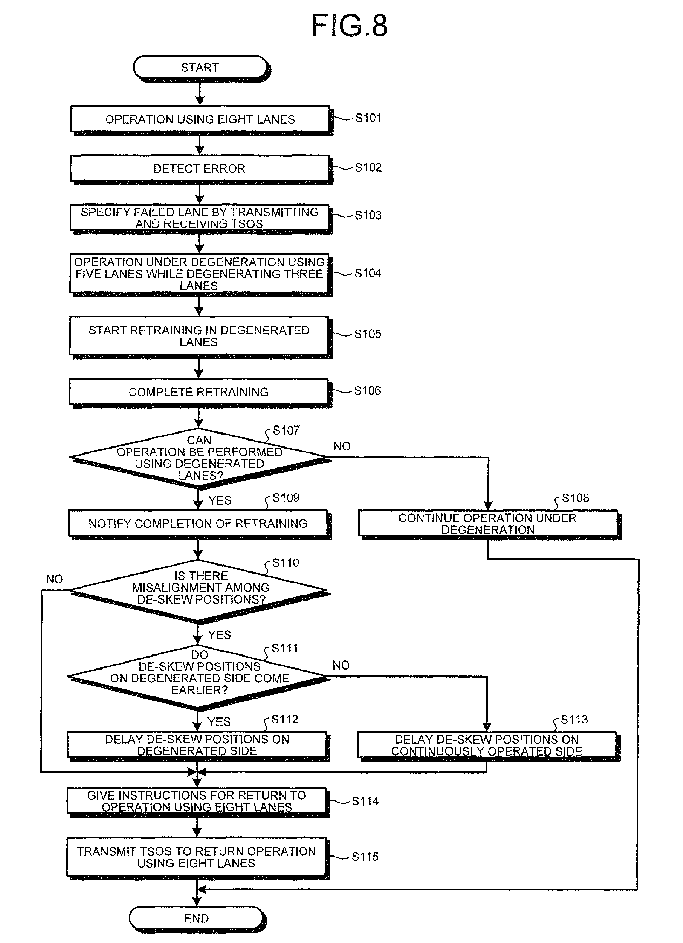

Next, the process in the event of a failure and the failure recovery in the information processing apparatus according to the present embodiment will be described with reference to FIG. 8. FIG. 8 is a flowchart of the process in the event of a failure and the failure recovery in the information processing apparatus according to the embodiment.

The transmission circuit 201 in the port 200 in the cross bar switch 20 and the reception circuit 101 in the port 100 in the CPU 10 transmit and receive the data with each other using the eight lanes during the normal operation before a failure (step S101).

Then, the reception circuit 101 detects an error, for example, using the Cyclic Redundancy Check (CRC) (step S102). The error can be not only a permanent failure but also, an intermittent failure due to the misalignment among the symbol locks or the misalignment among the de-skew patterns.

After receiving the notification of the error detection, the pattern generating unit 210 in the transmission circuit 201 transmits the TSOS to each of the lanes. Then, the TSOS detecting unit 501 receives the TSOS through the training pattern receiving unit 104 to detect the TSOS transmitted through each of the lanes. The TSOS detecting unit 501 notifies the information on the lane through which the TSOS has been detected to the failed lane detecting unit 502. The failed lane detecting unit 502 specifies the lane in which the failure has occurred according to the information on the lane through which the TSOS has been detected and received from the TSOS detecting unit 501 (step S103).

The failed lane detecting unit 502 notifies the information on the failed lane to the all lanes control unit 505. The all lanes control unit 505 determines the three lanes including the failed lane and to be degenerated. Then, the all lanes control unit 505 notifies the information on the three lanes to be degenerated to the port control unit 106. The all lanes control unit 505 further notifies the three lanes to be degenerated to the degenerated lane control unit 503. The all lanes control unit 505 further notifies the continuously-operated lane control unit 504 the instructions to continue the operation using the five lanes to be continuously operated after the degeneration together with the de-skew patterns of the five lanes. The continuously-operated lane control unit 504 confirms the connections of the continuously operated lanes by transmitting and receiving the TSOS, and then notifies the transmission and reception of the data through the five lanes using the de-skew patterns to the port control unit 106. The port control unit 106 degenerates the three lane instructed by the all lanes control unit 505 and performs the operation under degeneration using the remaining five lanes (step S104).

The degenerated lane control unit 503 starts the retraining in the three degenerated lanes (step S105). After completing the retraining in the three degenerated lanes (step S106), the degenerated lane control unit 503 determines whether the operation using the three lanes can be performed (step S107). When the operation cannot be performed (step S107: No), the continuously-operated lane control unit 504 continues the operation using the five lanes under degeneration (step S108).

On the other hand, when the operation can be performed (step S107: Yes), the degenerated lane control unit 503 notifies the completion of the retraining to the all lanes control unit 505 (step S109).

The all lanes control unit 505 determines whether there is misalignment among the de-skew positions of the three degenerated lanes and the five continuously operated lanes by comparing the de-skew patterns (step S110).

When there is the misalignment among the de-skew positions (step S110: Yes), the all lanes control unit 505 determines whether the de-skew position in the degenerated lanes comes earlier or later (step S111). In the drawing, the degenerated lanes are referred to as a "degenerated side".

When the de-skew positions on the degenerated side come earlier (step S111: Yes), the all lanes control unit 505 delays the de-skew positions on the degenerated side (step S112). On the other hand, when the de-skew positions on the side of the continuously operated lanes come earlier (step S111: No), the all lanes control unit 505 delays the de-skew positions on the side of the continuously operated lanes (step S113).

Then, the all lanes control unit 505 gives the port control unit 106 the instructions for the return to the operation using the eight lanes (step S114).

The transmission circuit 201 confirms the connections by transmitting the TSOS to the reception circuit 101. After that, the operation between the transmission circuit 201 and the reception circuit 101 using the eight lanes is returned (step S115).

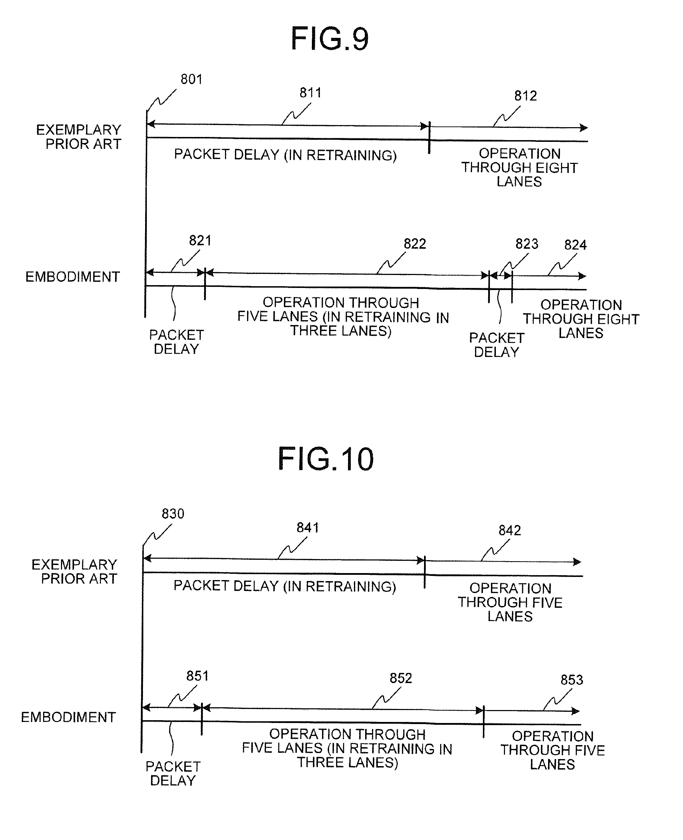

Next, the delay of the communication when lanes are degenerated and the degenerated lanes are returned will be described with reference to FIG. 9. FIG. 9 is a comparison diagram of the embodiment and an exemplary related art when the operation is performed while lanes are degenerated and the degenerated lanes are returned. In other words, FIG. 9 illustrates the operation in the event of an intermittent failure.

In FIG. 9, a failure occurs at a time 801. The information processing apparatus according to the exemplary related art immediately starts the retraining using all of the lanes for a term 811 and thus the packet continues delaying during the term 811. After the completion of the retraining, the information processing apparatus returns to the operation through the eight lanes in a term 812.

On the other hand, in the information processing apparatus according to the embodiment, the packet delays during a term 821 until the information processing apparatus degenerates the three lanes and continues the operation using the five lanes after the failure. The term 821 is very short in comparison with the term 811 in the exemplary related art. After that, the information processing apparatus performs the retraining using the three currently degenerated lanes in a term 822 in which the operation is performed through the five lanes. After the completion of the retraining through the three currently degenerated lanes, the packet delays in a term 823 to return the three currently degenerated lanes. After that, the information processing apparatus returns to the operation using the eight lanes in a term 824.

The embodiment can avoid the packet delay during whole the retraining as the exemplary related art because the embodiment performs the retraining in the degenerated lanes while continuing the operation using the five lanes during the term 822. The processes in the terms 821 and 823 are fewer than the processes in the retraining. Thus, the total amount of the packet delay time in the embodiment is lower in comparison with the exemplary prior art.

Next, the packet delay when an operation is performed while lanes are degenerated and the degenerated lanes are not returned will be described with reference to FIG. 10. FIG. 10 is a comparison diagram of the embodiment and an exemplary related art when an operation is performed while lanes are degenerated and the degenerated lanes are not returned. In other words, FIG. 10 illustrates the operation in the event of a permanent failure.

In FIG. 10, a failure occurs at a time 830. The information processing apparatus according to the exemplary related art immediately starts the retraining using all of the lanes for a term 841 and thus the packet continues delaying during the term 841. After the completion of the retraining, the information processing apparatus does not return the failed lane because the failure is a permanent failure. The information processing apparatus degenerates the three lanes and starts the operation using the five lanes in a term 842.

On the other hand, in the information processing apparatus according to the embodiment, the packet delays during a term 851 until the information processing apparatus degenerates the three lanes and continues the operation using the five lanes after the failure. After that, the information processing apparatus performs the retraining using the three currently degenerated lanes in a term 852 in which the operation is performed through the five lanes. After the completion of the retraining through the three currently degenerated lanes, it is found that the failure is a permanent failure in this case and the information processing apparatus does not return the three currently degenerated lanes. Accordingly, the information processing apparatus continues the operation using the five lanes in a term 853.

The embodiment can avoid the packet delay during whole the retraining as the exemplary related art because the embodiment performs the retraining in the degenerated lanes while continuing the operation using the five lanes in the term 852. The processes in the terms 851 and 853 are fewer than the processes in the retraining. Thus, the total amount of the packet delay time in the embodiment is lower in comparison with the exemplary prior art.

As described above, when a failure occurs, the information processing apparatus according to the exemplary related art performs retraining to determine whether the failure is an intermittent failure or a permanent failure and resume the operation. On the other hand, the information processing apparatus according to the present embodiment degenerates a predetermined number of lanes including the failed lane and continues the operation using the remaining lanes before determining whether the failure is an intermittent failure or a permanent failure. The information processing apparatus according to the present embodiment performs the retraining in the degenerated lanes before determining whether the failure is an intermittent failure or a permanent failure and then continues the operation under degeneration or returns to normal operation. Thus, the information processing apparatus according to the present embodiment can reduce the packet delay time in comparison with the retraining using all of the lanes.

In the event of a failure, the present embodiment degenerates three lanes including the failed lane. However, the number of lanes to be degenerated is not especially limited. For example, only a lane that is the failed lane can be degenerated or four lanes including the failed lane can be degenerated. In the present embodiment, the transmission circuit is connected to the reception circuit through the eight lanes. However, the number of the lanes is not especially limited as long as the number is plural.

As descried above, the information processing apparatus according to the present embodiment does not perform the retraining while stopping transmitting and receiving the data through all of the lanes. This can suppress the packet delay to only the term from the detection of a failure to the degeneration of the failed lane.

The information processing apparatus according to the present embodiment performs the retraining while separating the three currently degenerated lanes and can return the three lanes to the normal operation. This can improve whole of the throughput.

Furthermore, even when a failure in which the lane is not returned has occurred, the information processing apparatus according to the present embodiment immediately changes the operation to the operation using the five remaining lanes except for the degenerated lanes and continues the operation using the five lanes. This can reduce the packet delay time.

As described above, the information processing apparatus according to the present embodiment can suppress the occurrence of the timeout in the CPU or the like due to the delay of the communication and thus can reduce the errors that can affect the system.

### [Explanation of Reference]

1A, 1B System board
2 Cross bar board
10 CPU
20 Cross bar switch
100 Port
101 Reception circuit
102 Oscillator
103 Transmission circuit
104 Training pattern receiving unit
105 Degeneration control unit
106 Port control unit
111 to 113 Reception data SerDes
121 to 123 Symbol lock unit
131 to 133 De-skew unit
141 to 143 Frequency difference adjusting unit
151 to 153 8b/10b decoder unit
160 Reception data processing unit
201 Transmission circuit
202 Oscillator
203 Reception circuit
204 Training pattern receiving unit
205 Degeneration control unit
206 Port control unit
210 Pattern generating unit
220 Transmission data generating unit
231 to 233 8b/10b encoder unit
241 to 243 SerDes
501 TSOS detecting unit
502 Failed lane detecting unit
503 Degenerated lane control unit
504 Continuously-operated lane control unit
505 All lanes control unit

## Claims

1. An information processing apparatus comprising:
a reception unit configured to receive data using a plurality of lanes;
a degeneration control unit configured, when a failure occurs in one of the lanes, to degenerate a predetermined number of lanes including a lane in which the failure has occurred and to cause the reception unit to receive the data using remaining lanes except for the predetermined number of the degenerated lanes among the lanes;
a retraining unit configured to perform retraining to establish links in the predetermined number of the degenerated lanes; and
a return control unit configured, when the links are established in the predetermined number of lanes degenerated by the retraining with the retraining unit, to cause the reception unit to receive the data using the predetermined number of the degenerated lanes and the remaining lanes.

2. The information processing apparatus according to claim 1, further comprising:
a failure specifying unit configured to specify the lane in which the failure has occurred by transmitting and receiving test data.

3. The information processing apparatus according to claim 1 wherein the degeneration control unit causes the reception unit to continue to receive the data using the remaining lanes when the links in the predetermined number of the degenerated lanes are not established by the retraining.

4. The information processing apparatus according to claim 1 wherein the retraining unit performs a process as the retraining including receiving a test signal in each of the degenerated lanes, changing boundaries of bits in each of the degenerated lanes, compensating misalignment of the data among the degenerated lanes, and adjusting timings of data reception in the degenerated lanes to each other by correcting a difference between clock frequencies on a receiving side and a transmitting side.

5. The information processing apparatus according to claim 4 wherein the return control unit causes the reception unit to receive the data using the predetermined number of the degenerated lanes and the remaining lanes after the retraining unit has adjusted the timings of data reception in the predetermined number of the degenerated lanes to each other and has adjusted the timings of data reception in the predetermined number of the degenerated lanes to the timings of data reception in the remaining lanes.

6. An information processing apparatus comprising:
a transmission unit configured to transmit data using a plurality of lanes;
a reception unit configured to receive the data transmitted from the transmission unit using the lanes;
a degeneration control unit configured, when a failure occurs in one of the lanes, to degenerate a predetermined number of lanes including a lane in which the failure has occurred and to cause the reception unit to receive the data using remaining lanes except for the predetermined number of the degenerated lanes among the lanes;
a retraining unit configured to perform retraining to establish links in the predetermined number of the degenerated lanes; and
a return control unit configured, when the links are established in the predetermined number of lanes degenerated by the retraining with the retraining unit, to cause the reception unit to receive the data using the predetermined number of the degenerated lanes and the remaining lanes.

7. A method for controlling an information processing apparatus, the method comprising:
receiving data using a plurality of lanes;
when a failure occurs in one of the lanes, degenerating a predetermined number of lanes including a lane in which the failure has occurred;
receiving the data using remaining lanes except for the predetermined number of the degenerated lanes among the lanes;
performing retraining to establish links in the predetermined number of the degenerated lanes; and
when the links are established in the predetermined number of lanes degenerated by the retraining, receiving the data using the predetermined number of the degenerated lanes and the remaining lanes.
